# DEMANDE DE BREVET EUROPEEN

(11) **EP 2 208 647 A1**
(43) Date de publication de la demande: **21.07.2010**
(21) Numéro de dépôt: 09180447.6
(22) Date de dépôt: 22.12.2009
(51) Int. Cl.: B60R 22/02

(54) **Passant coulissant à élément de contrainte de pêne extractible, pour une ceinture de sécurité**

(30) Priorité: 15.01.2009 FR 0950234
(71) Demandeur: Peugeot Citroën Automobiles SA, 78140 Vélizy-Villacoublay (FR)
(72) Inventeur: Oudart, Fabrice, 25700 Valentigney (FR)
(74) Mandataire: Vigand, Régis Louis Michel

(57) **Abrégé**

Un passant (PC) est destiné à limiter le coulissement par rapport à une sangle (SC) de ceinture de sécurité (CS) d'un pêne extractible (PE) comportant un corps (PP) muni d'une ouverture (OP), dans laquelle peut coulisser la sangle (SC), et prolongé par une âme de verrouillage (AP). Ce passant (PC) est agencé de manière à coulisser le long de la sangle (SC) et comprend une face arrière (FR) opposée au pêne extractible (PE) et munie d'un élément de contrainte (EC) qui est agencé pour empêcher une partie d'extrémité libre (EL) du corps (PP), opposée à l'âme de verrouillage (AP), de s'écarter de cette sangle (SC).

## Description

L'invention concerne les ceintures de sécurité qui équipent certains sièges, par exemple de véhicules automobiles, et plus précisément les passants qui équipent certaines ceintures de sécurité et sont chargés de limiter le coulissement de leur pêne extractible par rapport à leur sangle.

Certaines ceintures de sécurité, qui équipent certains sièges, notamment de véhicules automobiles, comprennent un pêne extractible dans lequel coulisse une sangle munie d'un passant (ou barrette) et destiné à être introduit par un passager dans une boucle comportant un mécanisme de verrouillage amovible afin de le maintenir temporairement attaché sur son siège.

Lorsque le pêne extractible est placé en butée contre le passant sans être utilisé, la partie d'extrémité libre de son corps (opposée à son âme de verrouillage) peut, en présence de vibrations ou de chocs, venir heurter ou frotter un élément du véhicule, comme par exemple une garniture habillant une partie de sa structure. Ces heurts ou frottements induisent du bruit qui peut constituer une gêne pour les passagers du véhicule.

Afin de limiter ce bruit, il a été proposé, notamment dans le document brevet DE 10 2005 050 743, de fixer sur la face arrière d'un passant fixe (opposée au pêne extractible) un séparateur (ou espaceur) destiné à venir s'intercaler entre la partie d'extrémité libre du corps du pêne extractible et un élément voisin du véhicule. Grâce à un tel séparateur le pêne extractible ne peut plus heurter ou frotter un élément du véhicule au niveau de l'endroit ou le passant est fixé à la sangle. Cependant, en présence de vibrations ou de chocs important(e)s, le séparateur peut venir heurter ou frotter l'élément voisin du véhicule, et ainsi induire du bruit bien qu'il soit réalisé dans un matériau anti-bruit, sans que le passager ne puisse y remédier.

L'invention a donc pour but d'améliorer la situation.

Elle propose à cet effet un passant (ou barrette), d'une première part, destiné à limiter le coulissement par rapport à une sangle de ceinture de sécurité d'un pêne extractible comportant un corps muni d'une ouverture dans laquelle peut coulisser la sangle et prolongé par une âme de verrouillage, d'une deuxième part, comprenant une face arrière opposée au pêne extractible et munie d'un élément de contrainte agencé pour empêcher une partie d'extrémité libre du corps, opposée à l'âme de verrouillage, de s'écarter de la sangle, et d'une troisième part, agencé de manière à coulisser le long de la sangle.

Le passant selon l'invention peut comporter d'autres caractéristiques qui peuvent être prises séparément ou en combinaison, et notamment :
- son élément de contrainte peut comprendre une partie supérieure qui est munie d'une face destinée à contacter le corps et qui présente une inclinaison par rapport à la direction verticale qui est choisie de manière à empêcher la partie d'extrémité libre du corps de s'incliner par rapport à la direction verticale d'un angle sensiblement supérieur à un seuil choisi ;
   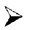 la face de la partie supérieure de l'élément de contrainte peut par exemple être inclinée par rapport à la direction verticale d'un angle obtus qui est compris entre environ 90° (c'est-à-dire ≥ 90°) et environ 170°;
- son élément de contrainte peut être agencé sous la forme d'une boucle;
- son élément de contrainte peut être réalisé dans un matériau anti-bruit;
- son élément de contrainte peut comprendre une partie inférieure opposée à sa partie supérieure et solidarisée à la face arrière du passant par au moins un pion ;
- dans une variante, son élément de contrainte peut comprendre une partie inférieure opposée à la partie supérieure et solidarisée par surmoulage à la face arrière du passant.

L'invention propose également une ceinture de sécurité comprenant une sangle coulissant dans une portion d'un pêne et un passant du type de celui présenté ci-avant.

Le pêne de cette ceinture de sécurité peut être du type dit « incurvé » ou bien du type dit « plat ».

L'invention est particulièrement bien adaptée aux ceintures de sécurité destinées à équiper des sièges de véhicule automobile.

D'autres caractéristiques et avantages de l'invention apparaîtront à l'examen de la description détaillée ci-après, et des dessins annexés, sur lesquels :
- la figure 1 illustre de façon schématique, dans une vue en perspective de côté, une partie d'une ceinture de sécurité installée sur un montant de structure de véhicule automobile et équipée d'un passant selon l'invention,
- la figure 2 illustre de façon schématique, dans une vue en perspective de l'arrière, le passant de la figure 1,
- la figure 3 illustre de façon schématique, dans une vue de côté, le passant des figures 1 et 2, et
- la figure 4 illustre de façon schématique, dans une vue de côté, une variante de réalisation du passant des figures 1 et 2.

Les dessins annexés pourront non seulement servir à compléter l'invention, mais aussi contribuer à sa définition, le cas échéant.

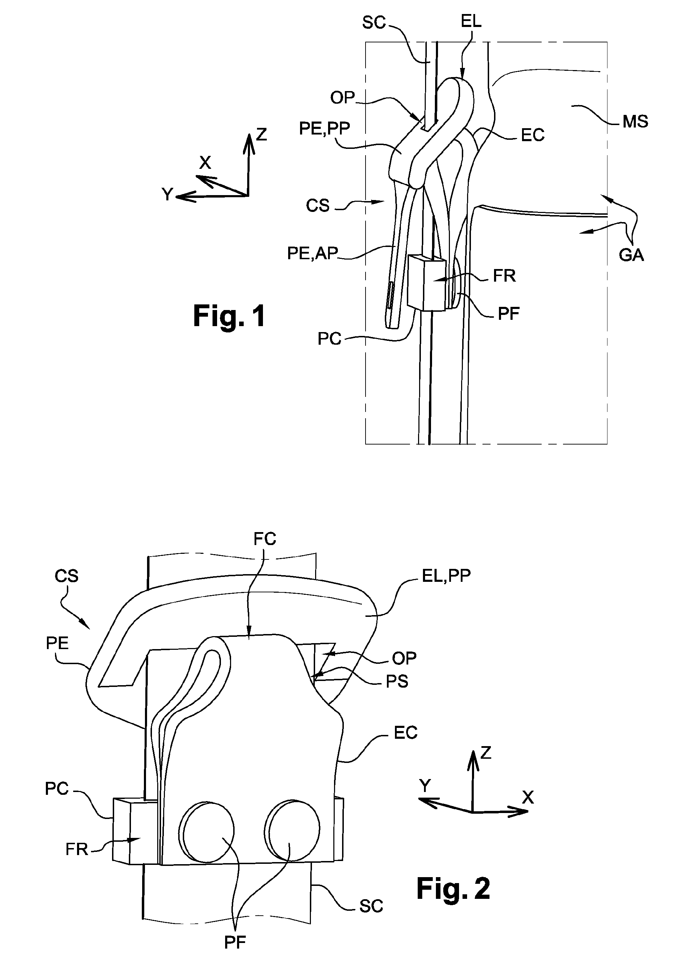

On a schématiquement représenté sur la figure 1 une partie d'une ceinture de sécurité CS destinée à équiper un siège (ou une partie de banquette), par exemple d'un véhicule automobile. Le siège peut par exemple être un siège avant, ou un siège intermédiaire (dans le cas d'un véhicule à au moins trois rangs), ou encore un siège arrière.

Sur les figures 1 à 4, l'axe Z matérialise la direction verticale, l'axe X matérialise la direction longitudinale du véhicule (sensiblement parallèle aux portes latérales) et l'axe Y matérialise la direction transversale du véhicule (sensiblement perpendiculaire aux portes latérales).

La ceinture de sécurité CS comprend tout d'abord une sangle SC comprenant des première et seconde extrémités opposées. Elle comprend également un enrouleur automatique (non représenté) destiné à être fixé à la structure (ou caisse) du véhicule, par exemple à un montant MS muni de garnitures GA, et auquel est solidarisée la première extrémité de la sangle SC. Elle comprend également un premier élément de fixation (non représenté) destiné à être fixé à la structure (ou caisse) du véhicule, dans une partie inférieure, et auquel est solidarisée la seconde extrémité de la sangle SC. Elle comprend également un second élément de fixation (non représenté) destiné à être fixé à la structure (ou caisse) du véhicule, dans une partie supérieure (par exemple du montant MS), et assurant le renvoi et le coulissement de la sangle SC.

La ceinture de sécurité CS comprend également un pêne extractible PE comportant, d'une part, un corps PP muni d'au moins une ouverture OP dans laquelle peut coulisser la sangle SC, et d'autre part, une âme de verrouillage AP prolongeant le corps PP et destinée à être introduite par un passager dans une boucle (non représentée), elle-même destinée à être fixée à la structure du véhicule ou bien au siège et comportant un mécanisme de verrouillage amovible.

L'âme (de verrouillage) AP est par exemple en métal et de forme aplatie (comme une lame). Le corps PP peut être revêtu d'un matériau synthétique ou bien d'un carter constitué de deux demi-coques en matière plastique (ou analogue).

Dans l'exemple non limitatif illustré sur les figures 1 à 4, le pêne extractible PE est de type dit « incurvé (ou courbé) » (l'âme AP est située dans un plan différent de la partie principale du corps PP où est définie l'ouverture OP). Mais, il pourrait être également de type dit « plat » (c'est-à-dire non courbé - l'âme AP étant alors située sensiblement dans le même plan que le corps PP).

Par ailleurs, dans l'exemple non limitatif illustré sur les figures 1 à 4, le corps PP comprend une partie d'extrémité libre EL qui est opposée à l'âme de verrouillage AP et qui est redressée par rapport à la partie principale du corps PP où est définie l'ouverture OP. Cela est destiné à écarter autant que possible le pêne extractible PE de l'élément voisin (ici le montant MS) du véhicule. Mais, cela n'est pas obligatoire. La partie principale du corps PP et la partie d'extrémité libre EL pourraient en effet être sensiblement dans un même plan.

Enfin, la ceinture de sécurité CS comprend un passant (ou barrette) PC comprenant un orifice central à l'intérieur duquel peut coulisser la sangle SC.

Ce passant PC peut être soit monobloc, soit constitué de deux demi-coques en matière plastique (ou analogue).

Selon l'invention, le passant PC est agencé de manière à coulisser le long de la sangle SC et comprend une face arrière FR opposée au pêne extractible PE et munie d'un élément de contrainte EC. Ce dernier est agencé de manière à empêcher la partie d'extrémité libre EL du corps PP de s'écarter de la sangle SC. En d'autres termes, l'élément de contrainte EC contraint la partie d'extrémité libre EL à présenter un angle aigu d'inclinaison par rapport à la sangle SC qui est inférieur ou égal à une valeur maximale (ou seuil) α.

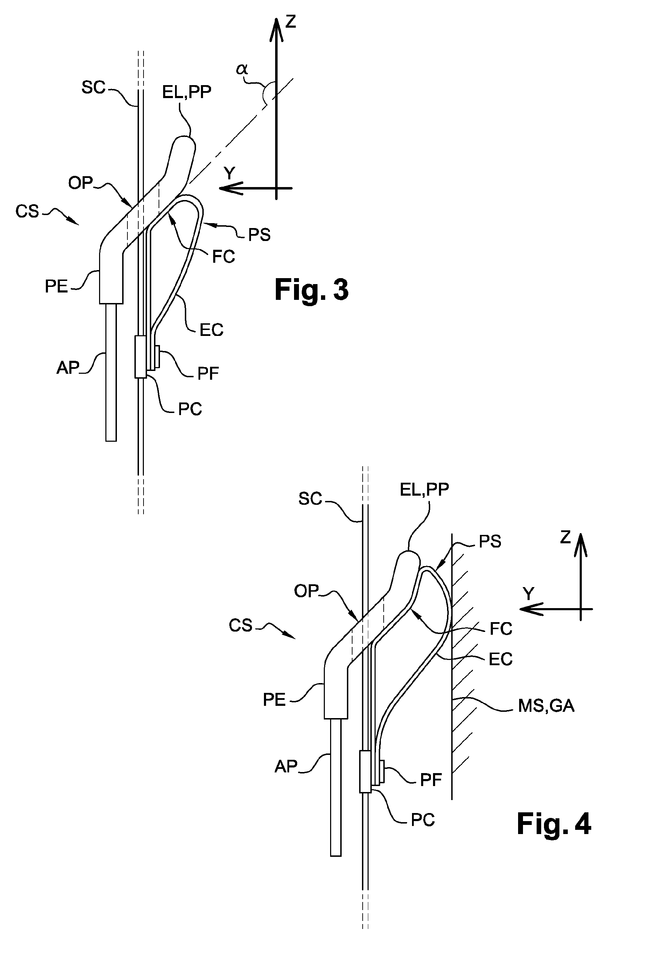

A cet effet, et comme cela est mieux illustré sur les figures 2 et 3, l'élément de contrainte EC peut par exemple comprendre une partie supérieure PS, opposée à sa partie inférieure qui est solidarisée à la face arrière FR du passant PC, et munie d'une face FC qui est destinée à contacter la partie principale du corps PP et qui présente une inclinaison (d'angle obtus α) par rapport à la direction verticale Z. Comme indiqué ci-avant, cette inclinaison α est choisie de manière à empêcher la partie d'extrémité libre EL du corps PP de s'incliner par rapport à la direction verticale Z d'un angle qui est sensiblement supérieur à un seuil choisi, afin qu'elle n'aille pas heurter ou frotter un élément voisin (ici le montant MS).

On comprendra que ce seuil choisi est égal à l'angle obtus α de l'inclinaison de la face FC de l'élément de contrainte EC, lequel peut par exemple être choisi dans un intervalle qui s'étend entre environ 90° et environ 170°. A titre d'exemple non limitatif l'angle obtus α peut être choisi égal à environ 150° ou 160°.

On comprendra que l'angle obtus α est l'angle qui sépare le plan, dans lequel est sensiblement située la face FC de l'élément de contrainte EC, du plan constitué à partir des directions verticale Z et longitudinale X.

Comme cela est illustré non limitativement sur les figures 1 à 3, l'élément de contrainte ES peut être agencé sous la forme d'une boucle. Une forme en boucle est avantageuse car la partie de la boucle ES qui est opposée à la sangle SC peut alors servir de surface d'appui sur l'élément voisin (ici le montant MS) et donc permettre de maintenir le pêne extractible PE à une certaine distance dudit élément voisin.

La boucle ES peut par exemple être réalisée en tissu au moins semi-rigide. Le tissu est un matériau avantageux car il dispose d'une capacité d'amortissement assez importante et n'induit pas de bruit lorsqu'il heurte ou frotte un élément voisin du véhicule (ici le montant MS).

Mais, la boucle ES peut être également réalisée dans un matériau plastique ou synthétique moulé, de préférence de type anti-bruit de manière à ne pas induire de bruit lorsqu'elle heurte ou frotte un élément voisin du véhicule (ici le montant MS). On notera que dans ce cas, l'élément de contrainte ES n'est pas obligatoirement en forme de boucle. Il peut en effet se présenter sous la forme d'une patte dont une partie (éventuellement terminale) comprend la face FC de contrainte. Cette patte peut par exemple être en matière caoutchoutée.

On a représenté sur la figure 4, une variante de boucle ES réalisée dans un matériau flexible (par exemple caoutchouté). Grâce à son matériau flexible, la boucle ES peut se déformer et sa partie d'extrémité libre, opposée à sa partie fixée au passant PC, vient s'intercaler (en s'écrasant légèrement) entre le montant MS du véhicule et une face de la partie d'extrémité libre EL du corps PP.

Le mode de fixation de l'élément de contrainte ES sur la face arrière FR du passant PC dépend du matériau dans lequel ledit élément de contrainte ES est réalisé. Ainsi, si il est réalisé en tissu semi-rigide sa partie inférieure peut par exemple être collée ou cousue ou encore fixée par au moins un pion PF (et de préférence deux, comme illustré non limitativement sur les figures 1 à 3) ou au moins une agrafe (et de préférence deux) sur la face arrière FR du passant PC. Si il est réalisé en matériau plastique ou synthétique sa partie inférieure peut par exemple être collée ou surmoulée ou encore fixée par au moins un pion PF (et de préférence deux, comme illustré non limitativement sur les figures 1 à 3) sur la face arrière FR du passant PC.

On notera que l'élément de contrainte EC peut éventuellement faire partie intégrante du passant PC. Dans ce cas, ils sont réalisés simultanément par moulage. On peut ainsi réaliser un passant monobloc en matière caoutchoutée, par exemple.

L'invention ne se limite pas aux modes de réalisation de passant et de ceinture de sécurité décrits ci-avant, seulement à titre d'exemple, mais elle englobe toutes les variantes que pourra envisager l'homme de l'art dans le cadre des revendications ci-après.

## Revendications

1. Passant (PC) pour limiter le coulissement par rapport à une sangle (SC) de ceinture de sécurité (CS) d'un pêne extractible (PE) comportant un corps (PP) muni d'une ouverture (OP), dans laquelle peut coulisser ladite sangle (SC), et prolongé par une âme de verrouillage (AP), **caractérisé en ce qu'**il est agencé de manière à coulisser le long de ladite sangle (SC), et **en ce qu'**il comprend une face arrière (FR) opposée audit pêne extractible (PE) et munie d'un élément de contrainte (EC) agencé pour empêcher une partie d'extrémité libre (EL) dudit corps (PP), opposée à ladite âme de verrouillage (AP), de s'écarter de ladite sangle (SC).

2. Passant selon la revendication 1, **caractérisé en ce que** ledit élément de contrainte (EC) comprend une partie supérieure (PS) munie d'une face (FC) destinée à contacter ledit corps (PP) et présentant une inclinaison par rapport à la direction verticale choisie de manière à empêcher ladite partie d'extrémité libre du corps (PP) de s'incliner par rapport à la direction verticale d'un angle sensiblement supérieur à un seuil choisi.

3. Passant selon la revendication 2, **caractérisé en ce que** ladite face (FC) de la partie supérieure (PS) dudit élément de contrainte (EC) est inclinée par rapport à la direction verticale d'un angle obtus compris entre environ 90° et environ 170°.

4. Passant selon l'une des revendications 1 à 3, **caractérisé en ce que** ledit élément de contrainte (EC) est agencé sous la forme d'une boucle.

5. Passant selon l'une des revendications 1 à 4, **caractérisé en ce que** ledit élément de contrainte (EC) est réalisé dans un matériau anti-bruit.

6. Passant selon l'une des revendications 1 à 5, **caractérisé en ce que** ledit élément de contrainte (EC) comprend une partie inférieure (PI) opposée à ladite partie supérieure (PS) et solidarisée à ladite face arrière (FR) du passant (PC) par au moins un pion (PF).

7. Passant selon l'une des revendications 1 à 5, **caractérisé en ce que** ledit élément de contrainte (EC) comprend une partie inférieure (PI) opposée à ladite partie supérieure (PS) et solidarisée par surmoulage à ladite face arrière (FR) du passant (PC).

8. Ceinture de sécurité (CS) comprenant une sangle (SC) coulissant dans un corps (PP) d'un pêne extractible (PC), **caractérisée en ce qu'**elle comprend en outre un passant (PR) selon l'une des revendications précédentes.

9. Ceinture de sécurité selon la revendication 8, **caractérisée en ce que** ledit pêne (PE) est du type dit « incurvé ».

10. Ceinture de sécurité selon l'une des revendications 8 et 9, **caractérisée en ce qu'**elle est destinée à équiper un siège de véhicule automobile.
